**Europäisches Patentamt**

**European Patent Office**

**Office européen des brevets**

(19)

(11) Veröffentlichungsnummer: **0 278 080**
**A1**

## (12) EUROPÄISCHE PATENTANMELDUNG

(21) Anmeldenummer: **87117880.2**

(22) Anmeldetag: **03.12.87**

(51) Int. Cl.⁴: **A47J 37/12**

(30) Priorität: **24.01.87 DE 8701190 U**

(43) Veröffentlichungstag der Anmeldung:
**17.08.88 Patentblatt 88/33**

(84) Benannte Vertragsstaaten:
**AT BE CH DE ES FR GB GR IT LI LU NL SE**

(71) Anmelder: **J.C. Binzer Papierfabrik GmbH &
Co. KG
Berleburger Strasse 71
D-3559 Hatzfeld/Eder(DE)**

(72) Erfinder: **Kilian, Karl-Heinz
Erfurter Str. 38
D-3559 Battenberg(DE)**
Erfinder: **Plohnke, Kurt, Dr.,Dipl.-Chem.
Eichendorffstr. 42
D-3559 Hatzfeld/ Eder(DE)**

(74) Vertreter: **Olbricht, Karl Heinrich, Dipl.-Phys.
Am Weinberg 15
D-3556 Niederweimar(DE)**

(54) **Filtereinsatz.**

(57) Die Erfindung betrifft einen Filtereinsatz aus einem schmiegsamen Material wie Papier, Vlies, Folie o.dgl., insbesondere zum Einlegen in dem Drahtkorb (K) einer Friteuse. Der Einsatz (10) hat einen Boden (12), von dem eine Wandung (14) im Winkel nach oben absteht. Boden (12) und Wandung (14) können einstückig oder miteinander fest, insbesondere stoffschlüssig verbunden sein. Bei einer Ausführungsform ist die Wandung (14) glatt und konusförmig oder zylindrisch ausgebildet. Eine andere vorteilhafte Gestaltung hat eine gewellte oder mit vorgebildeten Falten (16) versehene Wandung (14), deren Kontur rund, gerundet, wellig oder eckig sein kann. Bevorzugt ist der Boden (12) eben oder nach unten gewölbt.

## Filtereinsatz

Die Erfindung betrifft einen Filtereinsatz gemäß dem Oberbegriff von Anspruch 1.

Solche Filtereinsätze verwendet man namentlich beim Fritieren, d.h. beim Ausbacken von Speisen im heißen Ölbad, das bevorzugt aus Erdnußöl oder einem gehärteten, möglichst hitzebeständigen, zerlassenen Fett besteht. Dazu wird in einen das Öl bzw. Fett enthaltenden Topf ein Drahtkorb eingebracht, der das zu garende Gut aufnimmt, beispielsweise Kartoffelstücke in Form von Vierkantstäbchen. Um zu verhindern, daß das Fritieröl durch Speisenteile verunreinigt wird, gibt es bereits Einsätze aus Filterpapier, die als Kreisscheiben gestaltet und am Rand mit radialen Einschnitten versehen sind. Damit wird der Korb ausgeschlagen, indem die Randsektoren hochgeklappt werden. Deren Begrenzungen überlappen sich zwar in der Umfangsrichtung etwas, doch können sich die zwischen benachbarten Sektoren vorhandenen Schlitze verschieben; sie lassen sich prinzipiell nicht abdichten. Das Einlegen sollte daher sorgfältig erfolgen, was nicht jedem und nicht jedesmal gleich gut gelingt. Die Handhabung der herkömmlichen Filterscheiben ist also nicht sehr praktisch und weitgehend dem Geschick der Einzelperson überlassen.

Dies gilt auch für eine andere Gestaltung, bei der eine Kreisscheibe von außen über ein Drahtgestell gezogen wird. Dazu hat die Filterscheibe nahe dem Umfang eine Anzahl Löcher, mit denen die Festlegung am Oberteil eines Spannringes erfolgt, der mittels Spangen zusammengehalten wird. Bei dieser Befestigungsweise wird der Boden des Filtereinsatzes stark gespannt und gegebenenfalls überdehnt, während am Umfang mehr oder weniger definierte Falten gebildet werden. Volle Dichtheit ist mithin ebenfalls nicht gewährleistet, hingegen das Einreißen des Filterrandes oder eine sonstige Beschädigung der Filterscheiben bei ungeschickter Handhabung leicht möglich.

Es ist ein wichtiges Ziel der Erfindung, unter Vermeidung der Nachteile des Standes der Technik einen verbesserten Filtereinsatz zu schaffen, der ohne besonderen Arbeitsaufwand bequem, beschädigungsfrei und dicht in den Korb oder sonstigen Gitter-bzw. Lochflächen-Behälter eingelegt werden kann.

Ein Hauptmerkmal der Erfindung ist im kennzeichnenden Teil von Anspruch 1 angegeben. Weiterbildungen sind Gegenstand der Ansprüche 2 bis 7.

Gemäß Anspruch 1 hat der Einsatz einen Boden, von dem eine Wandung im Winkel nach oben absteht. Diese Gestaltung ist sehr einfach und deshalb herstellungsmäßig überaus verteilhaft.

Die Anwendung ist gänzlich unproblematisch, weil der Einsatz keine Verformung benötigt, sondern von vornherein in Gestalt und Größe den üblichen Körben angepaßt sein kann. Dank seiner allgemeinen Form als oben offener Hohlkörper kann er unmittelbar in einen Behälter eingebracht werden; Handhabungsfehler sind dabei nicht möglich. Weil jegliche Schlitze oder sonstige Undichtigkeiten fehlen, ist die Reinhaltung des Ölbades sowohl beim Fritieren als auch danach weitestgehend gesichert. Das Auswechseln des Filters geht mühelos und sauber vor sich.

Sehr vorteilhaft ist die Ausgestaltung laut Anspruch 2, wonach Boden und Wandung einstückig sind. Der Einsatz kann beispielsweise im Tiefziehverfahren hergestellt sein, das für diesen Zweck besonders wirtschaftlich ist. Es ist aber auch möglich und erfindungsgemäß vorgesehen, Boden und Wandung nach Anspruch 3 miteinander fest zu verbinden, insbesondere stoffschlüssig. Eine derartige Verbindung kann durch Kleben, Schweißen, Nähen oder ähnliche Maßnahmen bewirkt werden. Dadurch werden die zuvor einzeln gefertigten Teile hinreichend dicht miteinander verbunden, so daß der entstandene Hohlkörper ebenso sicher gehandhabt werden kann, wie das bei der einstückigen Bauform der Fall ist.

Gemäß Anspruch 4 kann die Wandung glatt und konusförmig oder zylindrisch ausgebildet sein. Der Einsatz hat somit die Grundgestalt eines Topfes oder einer Pfanne und ist daher ohne weiteres in einen entsprechend bemessenen Korb einzustellen bzw. einzuhängen, wobei er sich an dessen Rand anlegt. Das geschieht ebenfalls bei der Ausbildung nach Anspruch 5, wobei die Wandung gewellt oder mit vorgebildeten Falten versehen ist. Einerlei, ob die Kontur der Wandung gemäß Anspruch 6 rund, gerundet oder eckig ist, findet auch bei dieser Gestaltung zumindest an den Außenteilen der Kontur ein Formschluß mit dem Rand des Topfes statt. Zweckmäßig wird die Wandungshöhe immer so bemessen, daß der Einsatz den Drahtkorb in der gesamten Höhe abdeckt.

Der erfindungsgemäße Einsatz kann in allen Fällen an die Form des Behälters angepaßt sein, ob dieser nun rund, oval, quadratisch oder rechteckig ist. Die Gestaltung nach Anspruch 7 mit ebenem oder nach unten gewölbtem Boden stellt sicher, daß dieser stets optimal an dem Korbboden anliegt; auch wird die Handhabung zusätzlich erleichtert.

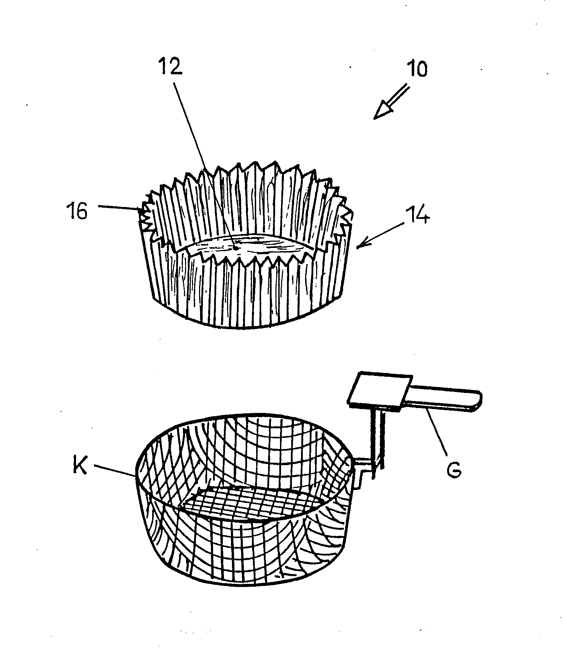

Weitere Merkmale, Einzelheiten und Vorteile ergeben sich aus dem Wortlaut der Ansprüche sowie aus der folgenden Beschreibung eines Ausführungsbeispiels anhand der Zeichnung.

Deren einzige Figur zeigt eine schematisierte Schrägansicht eines Filtereinsatzes oberhalb eines Drahtkorbes.

Der dargestellte Filtereinsatz ist allgemein mit 10 bezeichnet. Er hat einen vorzugsweise ebenen oder nach unten gewölbten Boden 12, an den sich seitlich eine Wandung 14 anschließt. Boden 12 und Wandung 14 können einstückig oder in geeigneter Weise miteinander fest verbunden sein.

Der Filtereinsatz 10 besteht aus einem - schmiegsamen Material wie Papier, Vlies, Folie, Textilien o.dgl. Wichtig ist, daß der Werkstoff porös ist, um den Durchtritt von Öl bzw. zerlassenem Fett zu gestatten. Dabei müssen die Poren hinreichend fein sein, so daß der Durchtritt von Speiseteilen in das Ölbad verhindert wird.

Die Wandung 14 kann glatt und konusförmig oder zylindrisch gestaltet sein. Im gezeichneten Ausführungsbeispiel ist sie jedoch mit Falten 16 versehen, gewissermaßen plissiert. Die Kontur der Wandung kann beliebig gestaltet, also rund, gerundet, wellig oder eckig sein.

Der Filtereinsatz 10 ist zweckmäßig so bemessen und geformt, daß er sich ohne weiteres zur Verwendung in herkömmlichen Friteusen eignet. Um dies zu verdeutlichen, zeigt die Figur unterhalb des Filtereinsatzes 10 auch in schematischer Schrägansicht einen Drahtkorb K, der einen Griff G aufweist, Mit letzterem kann der Korb K gehandhabt werden.

Im praktischen Gebrauch nimmt der Korb K den Filtereinsatz 10 auf, in den das zu garende Gut eingebracht wird. Ist est fritiert, so wird der volle Korb aus der (nicht dargestellten) Friteuse herausgehoben. Zweckmäßig wird für jeden Fritiervorgang ein neuer Filtereinsatz 10 verwendet, um das Fritieröl weitestgehend von Verunreinigungen freizuhalten. Der Austausch geht schnell und sauber vor sich.

Sämtliche aus den Ansprüchen, der Beschreibung und der Zeichnung hervorgehenden Merkmale und Vorteile der Erfindung, einschließlich konstruktiver Einzelheiten und räumlicher Anordnungen, können sowohl für sich als auch in den verschiedensten Kombinationen erfindungswesentlich sein.

Legende zu PA 509 EP

G Griff
K (Draht-)Korb

10 Einsatz
12 Boden
14 Wandung
16 Falten

## Ansprüche

1. Filtereinsatz aus einem schmiegsamen Material wie Papier, Vlies, Folie o.dgl., insbesondere zum Einlegen in den Drahtkorb (K) einer Friteuse, dadurch **gekennzeichnet**, daß der Einsatz (10) einen Boden (12) aufweist, von dem eine Wandung (14) im Winkel nach oben absteht.

2. Filtereinsatz nach Anspruch 1, dadurch **gekennzeichnet**, daß Boden (12) und Wandung (14) einstückig sind.

3. Filtereinsatz nach Anspruch 1, dadurch **gekennzeichnet**, daß Boden (12) und Wandung (14) miteinander fest, insbesondere stoffschlüssig verbunden sind.

4. Filtereinsatz nach einem der Ansprüche 1 bis 3, dadurch **gekennzeichnet**, daß die Wandung (14) glatt und konusförmig oder zylindrisch ausgebildet ist.

5. Filtereinsatz nach einem der Ansprüche 1 bis 3, dadurch **gekennzeichnet**, daß die Wandung (14) gewellt oder mit vorgebildeten Falten (16) versehen ist.

6. Filtereinsatz nach Anspruch 5, dadurch **gekennzeichnet**, daß die Kontur der Wandung (14) rund, gerundet, wellig oder eckig ist.

7. Filtereinsatz nach wenigstens einem der Ansprüche 1 bis 6, dadurch **gekennzeichnet**, daß der Boden (12) eben oder nach unten gewölbt ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | GB-A-2 067 085 (RIENSCH & HELD)<br>* Insgesamt * | 1 | A 47 J 37/12 |
| A | | 2,3,4,6,7 | |
| | --- | | |
| Y | DE-A-3 032 014 (BECHLEM)<br>* Ansprüche 1,5; Figur 1 * | 1 | |
| A | | 2,3,4,6,7 | |
| | --- | | |
| A | BE-A- 882 168 (MAGRIS)<br>* Insgesamt * | 1-4,6,7 | |
| | --- | | |
| A | US-A-4 362 623 (HOLOPAINEM)<br>* Figuren 1,2 * | 13,5-7 | |
| | --- | | |
| A | US-A-4 098 177 (OLNEY et al.)<br>* Figuren 2,3,7,8 * | 1-3,5-7 | |
| | --- | | |
| A | CH-A- 241 385 (GRUETER)<br>* Ingesamt *<br>----- | 1-3,5-7 | |

**RECHERCHIERTE SACHGEBIETE (Int. Cl.4)**

A 47 J

Der vorliegende Recherchenbericht wurde für alle Patentansprüche erstellt

| Recherchenort | Abschlußdatum der Recherche | Prüfer |
|---|---|---|
| DEN HAAG | 26-04-1988 | SCHARTZ J. |